# EUROPÄISCHE PATENTSCHRIFT

(11) **EP 1 701 422 B1**
(45) Veröffentlichungstag und Bekanntmachung des Hinweises auf die Patenterteilung: **02.04.2008**
(21) Anmeldenummer: 06110352.9
(22) Anmeldetag: 23.02.2006
(51) Int. Cl.: H02G 3/04, H02G 3/12

(54) **Gerätedose für Elektro-Installationsgeräte**
Apparatus box for electrical installation device
Boitier d'appareil pour dispositif d'installation électrique

(30) Priorität: 25.02.2005 DE 202005003068 U
(43) Veröffentlichungstag der Anmeldung: 13.09.2006
(73) Patentinhaber: GIRA Giersiepen GmbH & Co. KG, 42477 Radevormwald (DE)
(72) Erfinder: Fischer, Stefan, 42929, Wermelskirchen (DE); Weingärtner, Günther, 51688, Wipperfürth (DE)
(74) Vertreter: Patentanwälte Dr. Solf & Zapf

(56) Entgegenhaltungen:
- EP-A- 0 630 092
- GB-A- 2 229 869
- US-A- 5 379 972
- US-B1- 6 384 336

## Beschreibung

Die vorliegende Erfindung betrifft eine Gerätedose gemäß dem Oberbegriff des Patentanspruchs 1 zur Aufnahme von mindestens einem Elektro-Installationsgerät, wie Schalter, Steckdose und/oder dergleichen.

Herkömmliche Gerätedosen dienen in der Gebäude-Elektro-Installationstechnik zur Montage von Elektro-Installationsgeräten, indem zunächst die Dose als Gerätegehäuse in Aufputz-Montage (AP) oder bei Bedarf in Unterputz-Montage (UP) montiert und dann mindestens ein Gerät, häufig aber mehrere Geräte in einer Serienanordnung bevorzugt mit einem üblichen Stichmaß-Abstand von insbesondere 71 mm eingesetzt und verkabelt werden. Dabei muß das Dosen-Oberteil an den Stellen der jeweils vorhandenen Geräte geeignete Geräteöffnungen aufweisen, um bestimmte Zentraleinsätze, wie Schalter-Betätigungswippen, sogenannte Schuko-Töpfe für Schutzkontakt-Steckdosen und/oder dergleichen, montieren, d. h. mit dem jeweiligen Geräte-Einsatz verbinden zu können. Somit bildet das Oberteil eine Art Geräterahmen,
wobei im Bereich der/jeder Geräteöffnung nach innen in den Öffnungsquerschnitt weisende Randstege mit einer bestimmten, derart gerätespezifischen Randkontur vorgesehen sind, dass eine gegenseitige Positionierung (positionsgenaue Ausrichtung) zwischen dem jeweiligen Geräte-Einsatz und dem Oberteil (Rahmen) erreicht wird. Bei dieser bekannten Ausgestaltung ist von Nachteil, dass jede gewünschte Geräte-Konstellation eine bestimmte Ausführung insbesondere des Dosen-Oberteils erforderlich macht, die bezüglich der Anzahl und Anordnung der Geräteöffnung(en) an die jeweilige Gerätekonzeption angepasst sein muß. Deshalb müssen viele unterschiedliche Ausführungen des Oberteils vorgefertigt und bereitgestellt werden, was zu einem entsprechend großen Aufwand für Herstellung und Lagerhaltung führt. Zudem sind bei bekannten Geräten die Oberteile zumeist auf eine bestimmte Maximalzahl von Geräteöffnungen beschränkt, üblicherweise gibt es maximal 5-fach-Ausführungen mit somit maximal fünf Geräteöffnungen. Andere Ausführungen wären jedenfalls Sonderanfertigungen, und daher - wenn überhaupt möglich - mit erhöhten Kosten verbunden.

Eine "Gerätedose" der gattungsgemäßen, im Oberbegriff des Anspruchs 1 definierten Art ist in der EP 0 630 092 A1 beschrieben. Eigentlich handelt es sich aber um einen Kabelkanal, der in üblicher Weise aus einem Kanal-Unterteil (Basisabschnitt) und Deckelteilen besteht. In einem Bereich des Kanals, in dem mindestens ein elektrisches Gerät montiert werden soll, wird mindestens eine zusätzliche Dose in das Kanal-Unterteil eingesetzt, und mit dem Unterteil wird in diesem Bereich - anstatt der normalen Deckelteile - ein spezielles Oberteil verbunden, welches aus einem äußeren Rahmen, einem inneren Rahmen sowie einer zwischen den beiden Rahmenteilen anzuordnenden Montageplatte mit einer Geräteöffnung besteht. Dabei kann der äußere Rahmen zusammen mit der Montageplatte als eine Art "Deckelteil" angesehen werden. Alle drei Teile sind speziell mit bestimmter Größe z. B. als Spritzformteile herzustellen und über angeformte Verbinderelemente verbindbar. Nur das Kanal-Unterteil und die normalen Kanal-Deckelteile sind von Strangprofilabschnitten gebildet, wobei aber im Bereich des speziellen Oberteils die Deckelteile praktisch unterbrochen sind.

Der vorliegende Erfindung liegt die Aufgabe zugrunde, eine Gerätedose der genannten Art zu schaffen, die auf relativ wirtschaftliche und herstellungsmäßig einfache Weise für ein vergrößertes Anwendungsspektrum ausgelegt sein kann.

Erfindungsgemäß wird dies durch die Merkmale des Anspruchs 1 erreicht. Vorteilhafte Ausgestaltungsmerkmale der Erfindung sind Gegenstand der abhängigen Ansprüche.

Demnach besteht das Oberteil aus einem von einem Strangprofilabschnitt gebildeten und in einer oberen Deckwandung mindestens eine Geräteöffnung im Bereich des jeweils zugehörigen Geräte-Einsatzes aufweisenden Deckelteil, wobei im Bereich der/jeder Geräteöffnung ein gesondertes Rahmenteil mit dem Deckelteil verbunden ist. Hierbei umschließt das/jedes Rahmenteil eine an die Geräteöffnung sowie an einen mit dem Geräte-Einsatz jeweils zu verbindenden Zentraleinsatz angepaßte Rahmenöffnung. Im Bereich dieser Rahmenöffnung sind Randstege mit einer gerätespezifischen Randkontur vorgesehen. Die jeweils vorgesehenen Rahmenteile sind vorteilhafterweise alle identisch ausgebildet.

Somit ist das Dosen-Oberteil zumindest zweiteilig ausgebildet, und zwar aus dem Deckelteil und mindestens einem Rahmenteil. Durch die Ausführung des Deckelteils als Abschnitt eines "Endlos"-Strangprofils kann das Deckelteil mit praktisch beliebiger Länge und dadurch auch für nahezu unbegrenzte Geräte-Kombinationen ausgelegt werden, wobei Geräte in Serienanordnung direkt benachbart, bei Bedarf aber auch mit beliebigen (gerätefreien) Abständen montiert werden können. Es brauchen dazu nur in dem mit geeigneter Länge abgelängten Strangprofilabschnitt an den gewünschten Stellen die Geräteöffnungen hergestellt zu werden, was durch einfaches Ausstanzen unter Verwendung einer geeigneten Stanzvorrichtung erfolgen kann. Abschließend braucht nur noch im Bereich jeder so gebildeten Geräteöffnung ein Rahmenteil nach der Erfindung fixiert zu werden.

Erfindungsgemäß weist dazu das Deckelteil auf seiner dem Unterteil zugewandten Innenseite zwei gegenüberliegende und parallel in Längsrichtung des Strangprofilabschnittes verlaufende Führungsnuten derart auf, dass das bzw. jedes Rahmenteil mit zwei einander gegenüberliegenden Seitenrändern in die Führungsnuten eingeschoben werden kann. Das Rahmenteil liegt dann direkt unterhalb der oberen Deckwandung des Deckelteils und wird fluchtend in den Bereich der Geräteöffnung gebracht und dort insbesondere stoffschlüssig fixiert. Dazu kann zumindest punktweise ein geeigneter Klebstoff aufgebracht werden.

Vorteilhafterweise können das Deckelteil und das/jedes Rahmenteil aus verschiedenen Materialien bestehen. Bevorzugt besteht das Deckelteil als Strangpressprofil insbesondere aus Aluminium, woraus neben einem geschmacklich ansprechenden, eleganten Aussehen auch eine besonders wirtschaftliche Herstellung resultiert, weil ein Alu-Strangpress-Werkzeug sehr viel kostengünstiger ist als beispeilsweise ein Kunststoff-Spritzwerkzeug. Die Rahmenteile allerdings können bevorzugt als Kunststoff-Formteile (Spritzteile) ausgebildet sein.

In weiterer vorteilhafter Ausgestaltung besteht auch das Dosen-Unterteil aus einem Strangprofilabschnitt eines "Endlos-Profils" mit einer dem Oberteil entsprechenden Länge und bevorzugt aus einem dem Oberteil entsprechenden Material. Es ergeben sich dann im verbundenen Zustand von Unterteil und Oberteil gegenüberliegende offene Profil-Stirnseiten, die zweckmäßig jeweils mit einem separaten, insbesondere aus Kunststoff bestehenden Stirnwandungsteil verschlossen werden können.

Anhand eines bevorzugten, in den Zeichnungen veranschaulichten Ausführungsbeispiels soll die Erfindung genauer erläutert werden. Dabei zeigen:
- Fig.1: eine Perspektivansicht eines stirnseitigen Bereichs einer erfindungsgemäßen Gerätedose im montierten Zustand mit zwei - beispielhaft als Steckdosen ausgebildeten - Installationsgeräten,
- Fig. 2: eine Perspektivansicht analog zu Fig. 1, jedoch unter Weglassung bestimmter Einzelteile und mit einer zusätzlichen Montageschraube,
- Fig. 3: eine Perspektivansicht auf den stirnseitigen Endbereich nur des Unterteils mit montierten Geräte-Einsätzen,
- Fig. 4: eine Perspektivansicht des Oberteils mit einem gesonderten Rahmenteil zu Erläuterung der Montage und
- Fig.5: eine perspektivische Explosionsdarstellung der Einzelteile der erfindungsgemäßen Gerätedose.

In den verschiedenen Figuren der Zeichnung sind gleiche Teile stets mit den gleichen Bezugszeichen versehen.

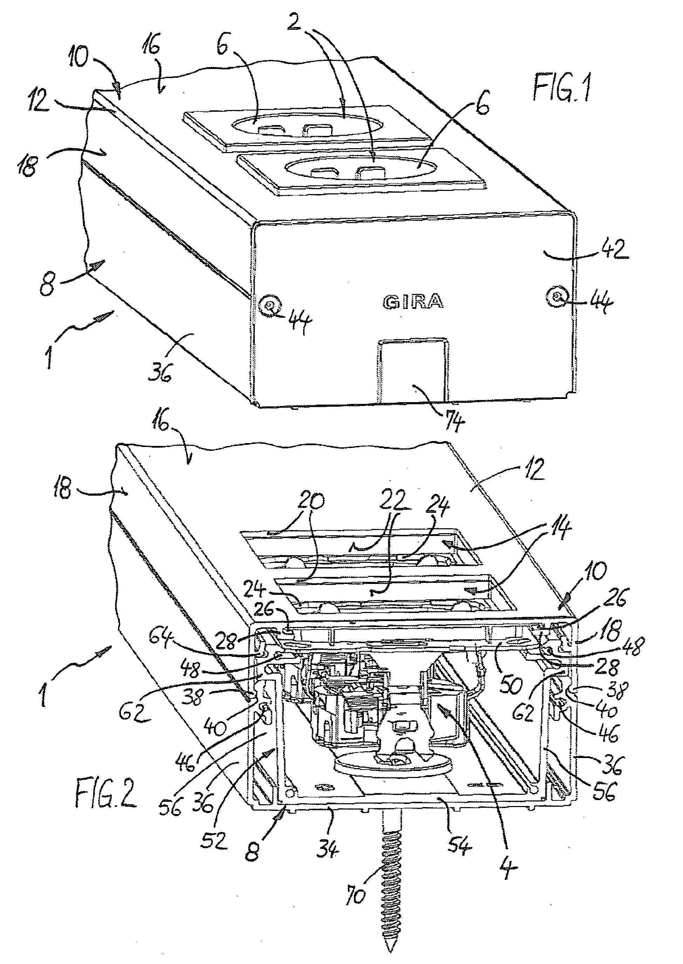

Eine erfindungsgemäße Gerätedose 1 dient gemäß Fig. 1 zur Aufnahme von mindestens einem Elektro-Installationsgerät 2, das aus einem sockelartigen Geräte-Einsatz 4 und einem Zentraleinsatz 6 besteht (siehe Fig. 2 bis 5). In der Zeichnung sind als Installationsgeräte 2 beispielhaft Steckdosen dargestellt, wobei der Zentraleinsatz 6 als sogenannter Schuko-Topf ausgebildet ist; es kann sich aber auch um Schalter unterschiedlicher Art handeln, beispielsweise Wechsel- oder Serienschalter, die als Zentraleinsatz mindestens eine Schalterwippe aufweisen. Die Gerätedose 1 besteht aus einem Dosen-Unterteil 8 zur halternden Aufnahme des Geräte-Einsatzes 4 bzw. mehrerer solcher Einsätze 4 sowie aus einem deckelartigen Dosen-Oberteil 10.

Erfindungsgemäß ist nun das Oberteil 10 zumindest zweiteilig aus einem Deckelteil 12 und mindestens einem Rahmenteil 14 ausgebildet. Das Deckelteil 12 ist hierbei als ein von einem längeren "Endlosprofil" abgelängter Strangprofilabschnitt gebildet. Dabei besteht das Deckelteil 12 aus einem umgekehrt U-förmigen Profil mit einer oberen, ebenen Deckwandung 16 und zwei dazu im Wesentlichen senkrechten Seitenstegen 18. Für jedes vorgesehene Gerät 2 bzw. jeden in dem Unterteil 8 angerodneten Geräte-Einsatz 4 ist in der Deckwandung 16 an der entsprechenden, zumindest teilweise flächenüberdeckend oberhalb des jeweiligen Einsatzes 4 liegenden Stelle eine Geräteöffnung 20 insbesondere als Ausstanzung gebildet. Im Bereich jeder Geräteöffnung 20 ist eines der Rahmenteile 14 mit dem Deckelteil 12 unterhalb der Deckwandung 16 verbunden. Dabei umschließt jedes Rahmenteil 14 eine an die Geräteöffnung 20 sowie an den jeweiligen Zentraleinsatz 6 angepaßte Rahmenöffnung 22. Ferner sind im Bereich der Rahmenöffnung 22 nach innen in die Öffnung ragende Randstege 24 mit einer derart gerätespezifischen Randkontur vorgesehen, dass im Zusammenwirken zwischen der Rahmenöffnung 22 und dem jeweiligen Geräte-Einsatz 4 eine gegenseitige Fixierung bzw. Positionierung gewährleistet ist. Zusätzlich wirken die Randstege 24 auch mit dem jeweiligen Zentraleinsatz 6 zusammen.

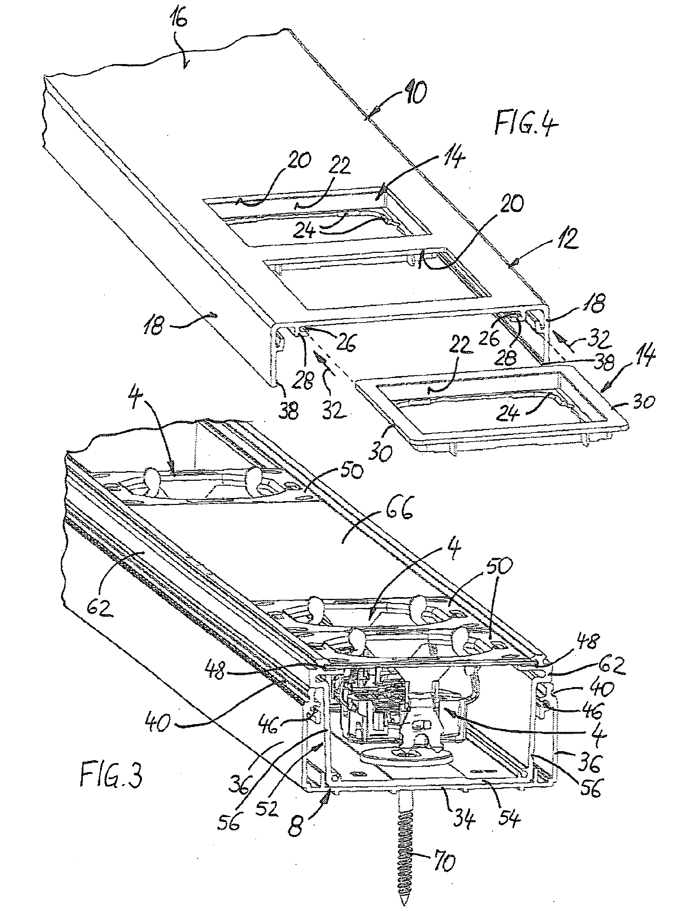

Für die Verbindung jedes Rahmenteils 14 mit dem Deckelteil 12 ist bevorzugt vorgesehen, dass das Deckelteil 12 auf seiner dem Unterteil 8 zugewandten Innenseite zwei seitliche, gegenüberliegende und parallel in Längsrichtung des Strangprofilabschnittes verlaufende Führungsnuten 26 aufweist, siehe hierzu insbesondere Fig. 4. Diese Führungsnuten 26 können mit Vorteil von L-förmigen Profilabschnitten 28 gebildet sein. Jedes Rahmenteil 14 ist mit zwei einander gegenüberliegenden Seitenrändern 30 (siehe Fig. 4) so in die Führungsnuten 26 einschiebbar (siehe in Fig. 4 die Pfeile 32), dass es im eingeschobenen Zustand direkt unterhalb der oberen Deckwandung 16 liegt. Jedes Rahmenteil 14 wird mit seiner Rahmenöffnung 22 im Wesentlichen deckungsgleich mit einer der Geräteöffnungen 20 positioniert und in dieser Stellung insbesondere stoffschlüssig durch einen geeigneten Klebstoff und/oder auf andere geeignete Weise fixiert.

Vorzugsweise ist auch das Dosen-Unterteil 8 als von einem längeren Profil abgelängter Strangprofilabschnitt gebildet. Auch dieses Profil ist im Wesentlichen U-förmig mit einem Boden 34 und zwei Seitenwänden 36 ausgebildet. Zweckmäßig ist hierbei das Oberteil 10 mit dem Unterteil 8 durch einfaches Aufsetzen verrastbar. Im dargestellten Ausführungsbeispiel weisen dazu die Seitenstege 18 des Deckelteils 12 an den Innenseiten ihrer Endkanten Raststege 38 auf, die in korrespondierende Rastnuten 40 an den Außenseiten der Seitenwände 36 des Unterteils 8 einrasten. Hierzu wird insbesondere auf Fig. 2 bis 4 verwiesen.

Mit Vorteil können das Deckelteil 12 und die Rahmenteile 14 aus verschiedenen Materialien bestehen. Insbesondere besteht das Deckelteil 12 als Strangpressprofil aus Aluminium, während jedes Rahmenteil 14 als Kunststoff-Formteil ausgebildet ist.

Durch die bisher beschriebene Ausgestaltung ergeben sich im zusammengesetzten Zustand von Unterteil 8 und Oberteil 10 zwei gegenüberliegende offene Stirnseiten, die zweckmäßigerweise mit jeweils einem separaten, insbesondere aus Kunststoff bestehenden Stirnwandungsteil 42 verschließbar sind. Die Befestigung erfolgt insbesondere mit Schrauben 44, die durch Löcher des Stirnwandungsteils 42 in axiale Schraubkanäle 46 des Unterteils 8 einschraubbar sind.

Weiterhin weist das Unterteil 8 zur Halterung des/jedes Geräte-Einsatzes 4 zwei gegenüberliegende Aufnahmenuten 48 zum Einsetzen von gegenüberliegenden Rändern eines sogenannten Tragringes 50 des jeweiligen Geräte-Einsatzes 4 auf.

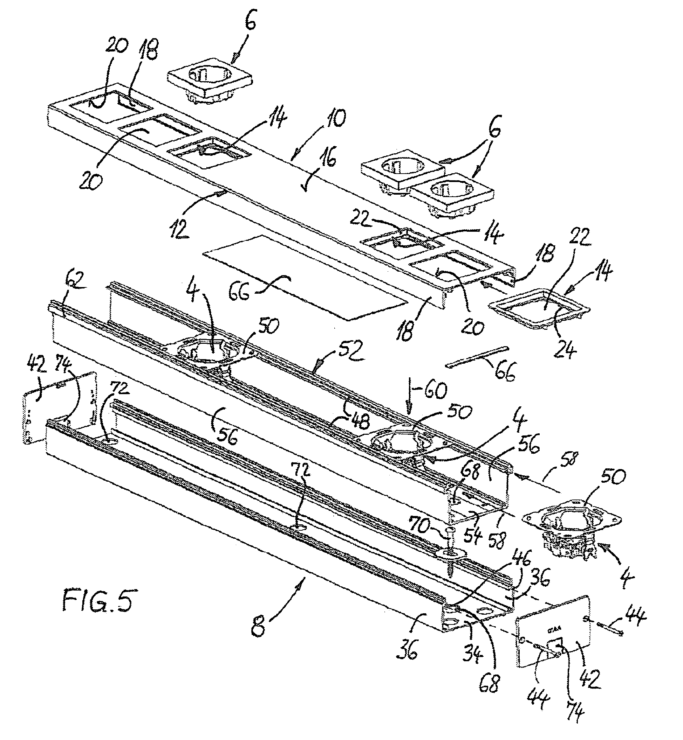

Bevorzugt weist hierbei das Unterteil 8 ein zusätzliches, inneres Einsatzprofil 52 ebenfalls in Form eines U-Profils mit einem Boden 54 und zwei Seitenwänden 56 auf, wobei bevorzugt die Aufnahmenuten 48 in den oberen Endbereichen der Seitenwände 56 des Einsatzprofils 52 gebildet sind. Durch diese Ausgestaltung können die Geräte-Einsätze 4 entweder durch axiales Einschieben der Tragringe 50 in die Aufnahmenuten 48 in Pfeilrichtung 58 gemäß Fig. 5 montiert werden, oder aber durch senkrechtes Einsetzen in Pfeilrichtung 60 unter elastischer Verformung der Seitenwände 36 bzw. 56. Die Geräte-Einsätze 4 sind grundsätzlich axial verschiebbar und können hierdurch genau in Längsrichtung positioniert werden. Die Fixierung erfolgt dann entsprechend der Anordnung der jeweiligen Geräteöffnung 20 bzw. Rahmenöffnung 22 des Oberteils 10 und durch Einsetzen des zugehörigen Zentraleinsatzes 6, der mit dem Geräte-Einsatz 4 verbunden, insbesondere verschraubt oder verrastet wird.

Bei der dargestellten, bevorzugten Ausführung bestehen das Unterteil 8 und das Einsatzprofil 52 aus verschiedenen Materialien, und zwar das Unterteil 8 als Stangpressprofil aus Aluminium, während das Einsatzprofil 52 elektrisch isolierend aus einem Kunststoff besteht. Dadurch wird eine elektrische Isolierung zwischen dem metallischen Unterteil 8 und den elektrischen Bestandteilen der Geräte 2 bzw. Einsätze 4 erreicht. Wie sich insbesondere aus Fig. 2 ergibt, wird das Einsatzprofil 52 mit seitlichen, sickenartigen Profilabschnitten 62 zwischen den oberen Endkanten der Seitenwände 36 des Unterteils 8 und inneren Profilstegen 64 des Oberteils 10 bzw. des Deckelteils 12 gehalten.

Im Zusammenhang damit ist es weiterhin vorteilhaft, den Innenraum des Unterteils 8 bzw. des Einsatzprofils 52 auch in Richtung des Oberteils 10 isolierend abzudecken, und zwar vor allem dann, wenn das Oberteil 10 bzw. das Deckelteil 12 aus Metall besteht. Dazu ist mindestens ein ebenes, aus einem elektrisch isolierenden Material (Kunststoff) bestehendes Wandungsteil 66 vorgesehen, welches analog zu den Tragringen 50 in die Aufnahmenuten 48 des Unterteils 8 einsetzbar ist. Hierdurch können jeweils axial neben einem Geräte-Einsatz 4 bzw. zwischen zwei Einsätzen 4 liegende Bereiche isolierend geschlossen werden; siehe insbesondere Fig. 3. Dabei fungieren die Wandungsteile 66 auch als Abstandhalter axial zwischen je zwei Geräte-Einsätzen 4.

Zur Befestigung des Unterteils 8 auf einer Montagefläche, beispielsweise auf einer Gebäudewand, d. h. in sogenannter Aufputz-Montage (AP), sind gemäß Fig. 5 in der Bodenwandung 34 des Unterteils 8 und gegebenenfalls in dem Boden 54 des Einsatzprofils 52 Montagelöcher 68 für Montageschrauben 70 vorgesehen. Ferner ist zum Einführen eines nicht dargestellten Anschlusskabels in der Bodenwandung 34 des Unterteils 8 und gegebenenfalls in dem Boden 54 des Einsatzprofils 52 mindestens eine Durchführöffnung 72 vorhanden. Zusätzlich oder alternativ kann jedes Stirnwandungsteil 42 zur Bildung einer Kabel-Einführöffnung ein abtrennbares (herausbrechbares) Wandungsstück 74 aufweisen.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Gerätedose (1) zur Aufnahme von mindestens einem Elektro-Installationsgerät (2), wie Schalter, Steckdose und/oder dergleichen, bestehend aus einem - insbesondere in sogenannter Aufputz-Montage auf einer Montagefläche zu befestigenden - Dosen-Unterteil (8) zur halternden Aufnahme mindestens eines Geräte-Einsatzes (4) und einem deckelartigen Dosen-Oberteil (10), wobei das Oberteil (10) aus einem in einer oberen Deckwandung (16) mindestens eine Geräteöffnung (20) aufweisenden Deckelteil (12) besteht, wobei im Bereich der bzw. jeder Geräteöffnung (20) ein gesondertes Rahmenteil (14) mit dem Deckelteil (12) verbunden ist,
**dadurch gekennzeichnet, dass** dasDeckelteil(12)voneinem Strangprofilabschnitt gebildet ist, wobei das Deckelteil (12) auf seiner dem Unterteil (8) zugewandten Innenseite zwei gegenüberliegende und parallel in Längsrichtung des Strangprofilabschnittes verlaufende Führungsnuten (26) aufweist, wobei das/jedes Rahmenteil (14) mit zwei einander gegenüberliegenden Seitenrändern (30) so in die Führungsnuten (26) eingesetzt und im Bereich der zugehörigen Geräteöffnung (20) fixiert ist, dass es unterhalb der oberen Deckwandung (16) liegt.

2. Gerätedose nach Anspruch 1,
**dadurch gekennzeichnet, dass** das/jedes Rahmenteil (14) eine an die Geräteöffnung (20) und an einen mit dem Geräte-Einsatz (4) zu verbindenden Zentraleinsatz (6) angepasste Rahmenöffnung (22) umschließt und im Bereich der Rahmenöffnung (22) Randstege (24) mit einer gerätespezifischen Randkontur vorgesehen sind.

3. Gerätedose nach Anspruch 1 oder 2,
**dadurch gekennzeichnet, dass** das/jedes Rahmenteil (14) an dem Deckelteil (12) bzw. an der Innenseite der Deckwandung (16) stoffschlüssig fixiert ist.

4. Gerätedose nach einem der Ansprüche 1 bis 3,
**dadurch gekennzeichnet, dass** dasOberteil(10)mitdem Unterteil (8) verrastbar ist.

5. Gerätedose nach einem der Ansprüche 1 bis 4,
**dadurch gekennzeichnet, dass** dasDeckelteil(12)anbeiden Längsrändern der oberen Deckwandung (16) Seitenstege (18) aufweist, die das Unterteil (8) teilweise übergreifend mit diesem verrastbar sind.

6. Gerätedose nach einem der Ansprüche 1 bis 5,
**dadurch gekennzeichnet, dass** das Deckelteil (12) als Strangpressprofil insbesondere aus Aluminium besteht.

7. Gerätedose nach einem der Ansprüche 1 bis 6,
**dadurch gekennzeichnet, dass** das/jedes Rahmenteil (14) als Formteil insbesondere aus Kunststoff besteht.

8. Gerätedose nach einem der Ansprüche 1 bis 7,
**dadurch gekennzeichnet, dass** das Unterteil (8) von einem Strangprofilabschnitt gebildet ist.

9. Gerätedose nach einem der Ansprüche 1 bis 8,
**dadurch gekennzeichnet, dass** gegenüberliegende offene Stirnseiten von Unterteil (8) und Oberteil (10) mit jeweils einem separaten, insbesondere aus Kunststoff bestehenden Stirnwandungsteil (42) verschlossenen bzw. verschließbar sind.

10. Gerätedose nach einem der Ansprüche 1 bis 9,
**dadurch gekennzeichnet, dass** das Unterteil (8) zur Halterung des/jedes Geräte-Einsatzes (4) zwei gegenüberliegende Aufnahmenuten (48) zum Einsetzen von gegenüberliegenden Rändern eines Tragringes (50) des Geräte-Einsatzes (4) aufweist.

11. Gerätedose nach einem der Ansprüche 1 bis 10,
**dadurch gekennzeichnet, dass** das Unterteil (8) ein zusätzliches, inneres Einsatzprofil (52) aufweist, wobei vorzugsweise das Einsatzprofil (52) die Aufnahmenuten (48) zur Tragring-Halterung aufweist.

12. Gerätedose nach Anspruch 11,
**dadurch gekennzeichnet, dass** das Unterteil (8) und das Einsatzprofil (52) aus verschiedenen Materialien bestehen, und zwar insbesondere das Unterteil (8) als Strangpressprofil aus Aluminium und das Einsatzprofil (52) aus Kunststoff.

13. Gerätedose nach einem der Ansprüche 10 bis 12,
**gekennzeichnet durch** mindestens ein ebenes, aus einem elektrisch isolierenden Material bestehendes Wandungsteil (66) zum Einsetzen in die Aufnahmenuten (48) des Unterteils (8) jeweils in einem einem Geräte-Einsatz (4) in Profillängsrichtung benachbarten Bereich des Unterteils (8).

14. Gerätedose nach einem der Ansprüche 1 bis 13,
**dadurch gekennzeichnet, dass** das Unterteil (8) zur Befestigung auf der Montagefläche in einer ebenen Bodenwandung (34) Montagelöcher (68) für Montageschrauben (70) aufweist.

15. Oberteil (10) für eine Gerätedose (1) nach einem der Ansprüche 1 bis 14.

16. Unterteil (8) für eine Gerätedose (1) nach einem der Ansprüche 1 bis 14.

## Claims

1. Device box (1) for receiving at least one electrical installation device (2), such as a switch, socket-outlet and/or the like, comprising a box bottom part (8) - to be fastened on a mounting surface in particular by so-called surface mounting - for the supporting reception of at least one device insert (4), and a lid-like box top part (10), the top part (10) comprising a lid part (12) having at least one device opening (20) in a top covering wall (16), a separate frame part (14) being connected to the lid part (12) in the region of the or each device opening (20),
**characterised in that** the lid part (12) is formed by an extruded profile section, the lid part (12) having, on its inner side facing the bottom part (8), two opposite guide grooves (26) running parallel in the longitudinal direction of the extruded profile section, the/each frame part (14) being inserted by two mutually opposite lateral edges (30) into the guide grooves (26) and fixed in the region of the associated device opening (20) in such a way that it lies below the top covering wall (16).

2. Device box according to Claim 1,
**characterised in that** the/each frame part (14) surrounds a frame opening (22), which is matched to the device opening (20) and to a central insert (6) to be connected to the device insert (4), and edge webs (24) having a device-specific edge contour are provided in the region of the frame opening (22).

3. Device box according to Claim 1 or 2,
**characterised in that** the/each frame part (14) is fixed in a materially joined manner to the lid part (12) or to the inner side of the covering wall (16).

4. Device box according to one of Claims 1 to 3,
**characterised in that** the top part (10) is latchable to the bottom part (8).

5. Device box according to one of Claims 1 to 4,
**characterised in that** the lid part (12) has, at both longitudinal edges of the top covering wall (16), lateral webs (18) which are latchable to the bottom part (8) in a partially overlapping manner.

6. Device box according to one of Claims 1 to 5,
**characterised in that** the lid part (12) is composed, as an extruded profile, in particular of aluminium.

7. Device box according to one of Claims 1 to 6,
**characterised in that** the/each frame part (14) is composed, as a moulded part, in particular of plastic.

8. Device box according to one of Claims 1 to 7,
**characterised in that** the bottom part (8) is formed by an extruded profile section.

9. Device box according to one of Claims 1 to 8,
**characterised in that** opposite open end sides of bottom part (8) and top part (10) are closed or closable by in each case one separate end-wall part (42), composed in particular of plastic.

10. Device box according to one of Claims 1 to 9,
**characterised in that** the bottom part (8) has, for supporting the/each device insert (4), two opposite receiving grooves (48) for inserting opposite edges of a carrying ring (50) of the device insert (4).

11. Device box according to one of Claims 1 to 10,
**characterised in that** the bottom part (8) has an additional, inner insert profile (52), the insert profile (52) preferably having the receiving grooves (48) for supporting the carrying ring.

12. Device box according to one of Claims 1 to 11,
**characterised in that** the bottom part (8) and the insert profile (52) are composed of different materials, in particular the bottom part (8), as an extruded profile, of aluminium and the insert profile (52) of plastic.

13. Device box according to one of Claims 10 to 12,
**characterised by** at least one plane wall part (66), composed of an electrically insulating material, for insertion into the receiving grooves (48) of the bottom part (8) in each case in a region of the bottom part (8) adjacent to a device insert (4) in the longitudinal direction of the profile.

14. Device box according to one of Claims 1 to 13,
**characterised in that** the bottom part (8) has, for fastening on the mounting surface, in a plane bottom wall (34), mounting holes (68) for mounting screws (70).

15. Top part (10) for a device box (1) according to one of Claims 1 to 14.

16. Bottom part (8) for a device box (1) according to one of Claims 1 to 14.

## Revendications

1. Boîtier d'appareil (1) servant à recevoir au moins un appareillage d'installation électrique (2) tel qu'un interrupteur, une prise et/ou similaire, ce boîtier comprenant une partie inférieure de boîtier (8) - à fixer sur une surface de montage notamment dans un montage dit apparent - servant à recevoir tout en la maintenant au moins une pièce d'insertion d'appareil (4) et comportant également une partie supérieure de boîtier de type couvercle (10), la partie supérieure (10) comprenant un élément de couvercle (12) présentant dans une paroi supérieure de couvercle (16) au moins une ouverture d'appareil (20), un élément d'encadrement indépendant (14) étant relié à l'élément de couvercle dans la zone de l'ouverture et/ou de chaque ouverture d'appareil (20),
**caractérisé en ce que** l'élément de couvercle (12) est formé par un segment de profilé extrudé, l'élément de couvercle (12) présentant sur son côté intérieur tourné vers la partie inférieure (8) deux rainures de guidage (26) opposées et s'étendant en parallèle dans le sens de la longueur du segment de profilé extrudé, l'élément/chaque élément d'encadrement (14) muni de deux bords latéraux (30) opposés étant inséré dans les rainures de guidage (26) et étant fixé dans la zone de l'ouverture d'appareil (20) correspondante de telle manière qu'il soit placé au-dessous de la paroi supérieure de couvercle (16).

2. Boîtier d'appareil selon la revendication 1,
**caractérisé en ce que** l'élément/chaque élément d'encadrement (14) entoure une ouverture d'encadrement (22) adaptée à l'ouverture d'appareil (20) et à une pièce d'insertion centrale (6) devant être reliée à la pièce d'insertion d'appareil (4), et **en ce que**, dans la zone de l'ouverture d'encadrement (22), des nervures de bord (24) comportant un contour de bord spécifique à l'appareil sont prévues.

3. Boîtier d'appareil selon la revendication 1 ou 2,
**caractérisé en ce que** l'élément/chaque élément d'encadrement (14) est fixé par liaison de matière sur l'élément de couvercle (12) et/ou sur le côté intérieur de la paroi de couvercle (16).

4. Boîtier d'appareil selon l'une quelconque des revendications 1 à 3,
**caractérisé en ce que** la partie supérieure (10) peut être assemblée par enclenchement à la partie inférieure (8).

5. Boîtier d'appareil selon l'une quelconque des revendications 1 à 4,
**caractérisé en ce que** l'élément de couvercle (12) présente sur les deux bords longitudinaux de la paroi supérieure de couvercle (16) des nervures latérales (18), qui peuvent être assemblées par enclenchement à la partie inférieure (8) en la recouvrant partiellement.

6. Boîtier d'appareil selon l'une quelconque des revendications 1 à 5,
**caractérisé en ce que** l'élément de couvercle (12) en tant que profilé extrudé est notamment en aluminium.

7. Boîtier d'appareil selon l'une quelconque des revendications 1 à 6,
**caractérisé en ce que** l'élément/chaque élément d'encadrement (14) en tant que pièce moulée est notamment en matière plastique.

8. Boîtier d'appareil selon l'une quelconque des revendications 1 à 7,
**caractérisé en ce que** la partie inférieure (8) est formée par un segment de profilé extrudé.

9. Boîtier d'appareil selon l'une quelconque des revendications 1 à 8,
**caractérisé en ce que** les côtés frontaux ouverts opposés de la partie inférieure (8) et de la partie supérieure (10) sont et/ou peuvent être fermés par respectivement un élément de paroi frontale (42) séparé, notamment en matière plastique.

10. Boîtier d'appareil selon l'une quelconque des revendications 1 à 9,
**caractérisé en ce que** la partie inférieure (8) servant à maintenir la pièce/chaque pièce d'insertion d'appareil (4) présente deux rainures de réception (48) opposées pour l'introduction des bords opposés d'un anneau porteur (50) de la pièce d'insertion d'appareil (4).

11. Boîtier d'appareil selon l'une quelconque des revendications 1 à 10,
**caractérisé en ce que** la partie inférieure (8) présente un profilé de pièce d'insertion (52) interne supplémentaire, le profilé de pièce d'insertion (52) présentant de préférence les rainures de réception (48) servant à maintenir l'anneau porteur.

12. Boîtier d'appareil selon la revendication 11,
**caractérisé en ce que** la partie inférieure (8) et le profilé de pièce d'insertion (52) se composent de différents matériaux, la partie inférieure (8) en tant que profilé extrudé étant notamment en aluminium et le profilé de pièce d'insertion (52) en matière plastique.

13. Boîtier d'appareil selon l'une quelconque des revendications 10 à 12,
**caractérisé par** moins un élément de paroi (66) plat se composant d'une matière isolante électriquement, destiné à être introduit dans les rainures de réception (48) de la partie inférieure (8), respectivement dans une zone de la partie inférieure (8) adjacente à une pièce d'insertion d'appareil (4) dans le sens longitudinal du profilé.

14. Boîtier d'appareil selon l'une quelconque des revendications 1 à 13,
**caractérisé en ce que** la partie inférieure (8) à fixer sur la surface de montage dans une paroi de fond (34) plane présente des trous de montage (68) destinés aux vis de montage (70).

15. Partie supérieure (10) pour un boîtier d'appareil (1) selon l'une quelconque des revendications 1 à 14.

16. Partie inférieure (8) pour un boîtier d'appareil (1) selon l'une quelconque des revendications 1 à 14.
